# EUROPEAN PATENT SPECIFICATION

(11) **EP 3 525 269 B1**
(45) Date of publication and mention of the grant of the patent: **07.04.2021**
(21) Application number: 17858288.8
(22) Date of filing: 28.09.2017
(51) Int. Cl.: H01M 4/14, H01M 4/16, H01M 4/62, H01M 4/76, H01M 10/12

(54) **CLADDING TUBE, CLAD ELECTRODE, LEAD STORAGE BATTERY, PRODUCTION METHOD FOR THESE, AND ELECTRIC CAR**
HÜLLROHR, PLATTIERTE ELEKTRODE, BLEIAKKUMULATOR, HERSTELLUNGSVERFAHREN DAFÜR UND ELEKTROFAHRZEUG
TUBE DE GAINE, ÉLECTRODE TYPE GAINE AINSI QU'ACCUMULATEUR AU PLOMB, PROCÉDÉS DE FABRICATION DE CEUX-CI, ET VÉHICULE ÉLECTRIQUE

(30) Priority: 07.10.2016 JP 2016199334
(43) Date of publication of application: 14.08.2019
(73) Proprietor: Showa Denko Materials Co., Ltd., Tokyo 100-6606 (JP)
(72) Inventor: SUZUKI Keita, Tokyo 100-6606 (JP); SHIBAHARA Toshio, Tokyo 100-6606 (JP); MATSUOKA Kazuya, Tokyo 100-6606 (JP); TAKEBE Tomonori, Tokyo 100-6606 (JP); TAKEUCHI Hisaki, Tokyo 100-6606 (JP); MATSUMOTO Ryo, Tokyo 100-6606 (JP)
(74) Representative: Hoffmann Eitle
(86) International application number: PCT/JP2017/035271
(87) International publication number: WO 2018/066450

(56) References cited:
- WO-A1-2004/003283
- JP-A- H05 190 172
- JP-A- H05 190 172
- JP-A- H05 198 311
- JP-A- H07 320 771
- JP-A- H08 203 506
- JP-A- S62 147 659
- JP-A- 2000 030 696
- JP-A- 2001 035 485
- JP-A- 2016 162 501

## Description

### Technical Field

The present invention relates to a clad tube, a clad type electrode, a lead storage battery, a manufacturing method thereof, and an electric vehicle.

### Background Art

Lead storage batteries are one of secondary batteries used from the past and are widely used as secondary batteries for an industry or consumer use due to reliability, low price, and the like. In particular, there is a high demand for lead storage batteries for automobiles (so-called batteries), lead storage batteries for electric vehicles (for example, lead storage batteries for forklifts), or lead storage batteries for backup such as UPS (Uninterruptible Power Supply), disaster prevention (emergency) wireless devices, and telephones.

As the lead storage battery, a clad type lead storage battery including a clad type electrode is known. For example, the clad type electrode includes a plurality of tubular electrodes having a cylindrical shape and arranged side by side, and each tubular electrode includes a tubular clad tube, a core bar (a current collector) inserted into the clad tube, and an electrode material filled between the core bar and the clad tube. Patent Literature 1 below discloses a woven fabric tube mainly including glass fiber or synthetic fiber as the clad tube.

Patent Literature 2 describes a core metal which constitutes a collector for a clad type lead acid battery and which is prepared by casting a lead alloy containing 3.0 mass% or more and 7.0 mass% or less of antimony by a pressure casting method.

Patent Literature 3 describes a lead storage battery comprising a clad type electrode plate using a cube having an average pore diameter of 5 µm or less.

Patent Literature 4 describes a method for producing a glass fiber yarn to be used as a weft of a glass cloth, which comprises a strand formation step of collecting 200 to 800 glass filaments having an average diameter of 7 to 11 µm by the use of a collecting agent, to thereby form strands, and winding up the strands with a cake, and a twisting step of drawing the strands out of the cake and twisting them, wherein the collecting agent comprises a starch, a vegetable oil, a paraffin and an emulsifier containing at least an ether based emulsifier, and wherein the ether based emulsifier is contained in an amount of 5 to 40 mass % relative to the total amount of the paraffin and the ether based emulsifier.

### Citation List

### Patent Literature

Patent Literature 1: Japanese Unexamined Patent Publication No. H8-203506
Patent Literature 2: JP 2016 162501 A
Patent Literature 3: JP H05 190172 A
Patent Literature 4: WO 2004/003283 A1

### Summary of Invention

### Technical Problem

Incidentally, as the lead storage battery including the clad type electrode, a lead storage battery having excellent discharge characteristics has been required.

The invention has been made in view of the above-described circumstances and an object of the invention is to provide a clad tube and a clad type electrode capable of obtaining a lead storage battery having excellent discharge characteristics and a method of manufacturing the same. Another object of the invention is to provide a lead storage battery including the clad type electrode and a method of manufacturing the same. Still another object of the invention is to provide an electric vehicle including the lead storage battery.

### Solution to Problem

A clad tube of the invention is a clad tube which is to be used in a clad type electrode and in which a ratio A/B of a total pore volume A of a pore having a pore diameter of 10 µm or more with respect to a total pore volume B of a pore having a pore diameter smaller than 10 µm is 1.15 to 1.40.

A clad tube manufacturing method of the invention is a method of manufacturing a clad tube which is to be used in a clad type electrode, comprising: a step of impregnating a base material with a resin component, in which in the clad tube, a ratio A/B of a total pore volume A of a pore having a pore diameter of 10 µm or more with respect to a total pore volume B of a pore having a pore diameter smaller than 10 µm is 1.15 to 1.40.

When the clad tube of the invention or the clad tube obtained by the clad tube manufacturing method of the invention is used, it is possible to obtain a lead storage battery having excellent discharge characteristics.

The ratio A/B is preferably 1.23 to 1.38.

The clad tube preferably includes glass.

The clad tube of the invention may have an embodiment that the clad tube includes a fiber bundle containing a bundling agent and the bundling agent includes paraffin. The clad tube manufacturing method of the invention may have an embodiment that the base material includes a fiber bundle containing a bundling agent and the bundling agent includes paraffin.

The clad tube of the invention may have an embodiment that the clad tube includes a fiber bundle containing a bundling agent and the bundling agent includes starch. The clad tube manufacturing method of the invention may have an embodiment that the base material includes a fiber bundle containing a bundling agent and the bundling agent includes starch.

A clad type electrode of the invention includes the clad tube of the invention. A clad type electrode manufacturing method of the invention is a method of manufacturing a clad type electrode comprising a clad tube, including: a step of obtaining the clad tube by the method of manufacturing the clad tube of the invention. When the clad type electrode of the invention or the clad type electrode obtained by the clad type electrode manufacturing method of the invention is used, it is possible to obtain a lead storage battery having excellent discharge characteristics.

A lead storage battery of the invention includes the clad type electrode of the invention as a positive electrode. A lead storage battery manufacturing method of the invention is a method of manufacturing a lead storage battery including a clad type electrode as a positive electrode, comprising: a step of obtaining the clad type electrode by the method of manufacturing the clad type electrode of the invention. The lead storage battery of the invention and the lead storage battery obtained by the lead storage battery manufacturing method of the invention have excellent discharge characteristics.

An electric vehicle of the invention includes a lead storage battery and is as defined in the claims.

### Advantageous Effects of Invention

According to the invention, it is possible to provide a clad tube and a clad type electrode capable of obtaining a lead storage battery having excellent discharge characteristics and a method of manufacturing the same. Further, according to the invention, it is possible to provide a lead storage battery including the clad type electrode and a method of manufacturing the same. Furthermore, according to the invention, it is possible to provide an electric vehicle including the lead storage battery and a method of manufacturing the same.

### Brief Description of Drawings

FIG. 1 is a schematic cross-sectional view showing a lead storage battery of an embodiment of the invention.
FIG. 2 is a view showing a relationship between a discharge capacity and a pore volume ratio.

### Description of Embodiments

Hereinafter, an embodiment of the invention will be described in detail. However, the invention is not limited to the following embodiment.

The specific gravity varies depending on a temperature, and accordingly is defined as a specific gravity which is converted to that at 20°C, in the present specification. In the present specification, a numerical range indicated by using "∼" indicates a range which includes numerical values described before and after "-" as the minimum value and the maximum value, respectively. In the numerical ranges which are described stepwise in the present specification, the upper limit value or the lower limit value of the numerical range of a certain stage may be replaced with the upper limit value or the lower limit value of the numerical range of another stage. In the numerical ranges that are described in the present specification, the upper limit value or the lower limit value of the numeric value range may be replaced with the value shown in the Examples. "A or B" may include either one of A and B, and may also include both of A and B. Materials which are exemplified in the present specification can be used singly or in combinations of two or more, unless otherwise specifically indicated.

### <Lead Storage Battery>

A lead storage battery of the embodiment includes a positive electrode, a negative electrode, and a separator. The lead storage battery of the embodiment is a clad type lead storage battery which includes a clad type positive electrode for a lead storage battery with a clad tube. For example, a positive electrode and a negative electrode have a plate shape (a positive electrode plate and a negative electrode plate). As a basic configuration of the lead storage battery, the same configuration as that of the conventional lead storage battery can be used.

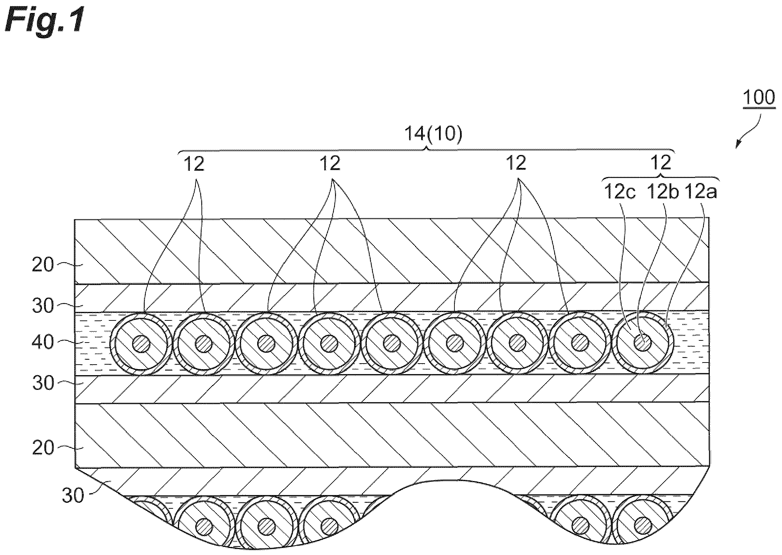

FIG. 1 is a schematic cross-sectional view showing a lead storage battery of the embodiment. A lead storage battery 100 illustrated in FIG. 1 is a clad type lead storage battery which includes a positive electrode 10, a negative electrode 20, and a separator 30. The positive electrode 10, the negative electrode 20, and the separator 30 are accommodated in a battery casing (not shown). The positive electrode 10 and the negative electrode 20 are alternately disposed with the separator 30 interposed therebetween. The battery casing accommodating the positive electrode 10, the negative electrode 20, and the separator 30 is filled with an electrolyte.

The positive electrode 10 is a clad type positive electrode plate and includes a tubular electrode group 14 which is composed of a plurality of tubular electrodes (bar-shaped electrodes) 12 arranged side by side. For example, the number of the tubular electrodes 12 is 14 to 19. Each tubular electrode 12 includes a tubular clad tube 12a, a core bar (a current collector) 12b inserted into the clad tube 12a, and a positive electrode material 12c filled between the clad tube 12a and the core bar 12b.

The clad tube 12a is composed of a tubular porous tube. Examples of the component materials of the clad tube 12a include glass and a resin component (for example, phenol resin (trade name "Phenolite" manufactured by DIC Corporation)). For example, the clad tube 12a may include a base material (a fiber base material or the like) impregnated with a resin component. For example, the clad tube 12a may include a fibrous component material (glass fibers or the like). The clad tube 12a may include a fiber bundle (a glass fiber bundle or the like). The fiber bundle may include a bundling agent, and for example, can be obtained by bundling fibers using a bundling agent. As the clad tube 12a, a glass tube (a tube including glass (a glass fiber bundle or the like)) is preferred from the viewpoint of excellent acid resistance. The glass tube may be in the form of C glass. Examples of the cross-sectional shapes perpendicular to the longitudinal direction of the clad tube 12a include a circular shape (FIG. 1) and an oval shape. For example, the length of the clad tube 12a is 160 to 400 mm. For example, the diameter (outer diameter) of the clad tube 12a is 9 to 12 mm.

In the clad tube 12a, a ratio A/B of a total pore volume A of a pore having a pore diameter of 10 µm or more with respect to a total pore volume B of a pore having a pore diameter smaller than 10 µm (the pore volume ratio of the total pore volume of the pore having a pore diameter of 10 µm or more/the total pore volume of the pore having a pore diameter smaller than 10 µm) is 1.40 or less from the viewpoint of obtaining excellent discharge characteristics. From the viewpoint of easy improvement of discharge characteristics, the ratio A/B is preferably 1.38 or less, more preferably 1.30 or less, further preferably 1.27 or less, and particularly preferably 1.25 or less. From the viewpoint of easy improvement of discharge characteristics, the ratio A/B is 1.15 or more, preferably 1.19 or more, further preferably 1.20 or more, and particularly preferably 1.23 or more. From these viewpoints, the ratio A/B is 1.15 to 1.40, preferably 1.15 to 1.38, further preferably 1.19 to 1.38, particularly preferably 1.20 to 1.38, extremely preferably 1.23 to 1.38, very preferably 1.23 to 1.30, further preferably 1.23 to 1.27, and particularly preferably 1.23 to 1.25. The total pore volume can be measured by a pore size distribution meter (for example, trade name: AUTO PORE IV 9520 manufactured by SHIMADZU CORPORATION). The ratio A/B can be adjusted by the amount of the resin component to be used (the impregnation amount of the resin component with respect to the fiber bundle, or the like) at the time of preparing the clad tube, the number (the number of warp yarns and twill yarns, or the like) of fibrous component materials (glass fibers or the like), and the like, and for example, when the amount of the resin component to be used at the time of preparing the clad tube is decreased, the ratio A/B tends to increase.

It is considered that the size of the pore diameter contributes to the diffusion of the electrolyte. Specifically, it is considered that, since the pore having a pore diameter smaller than 10 µm has a very high specific surface area (when the total pore volume is the same, the number of the pore diameters increase as the pore diameter decreases, and hence a specific surface area easily increases), a surface tension is high, and ions such as SO₄²⁻ and H⁺ that contribute to the discharge reaction "PbO₂ + 4H⁺ + SO₄²⁻ + 2e⁻ ⇒ PbSO₄ + 2H₂O" are easily attracted as microscopic electrolyte diffusion. Further, in the pore having a pore diameter of 10 µm or more, it is considered that the movement of the electrolyte easily occurs as macroscopic electrolyte diffusion in accordance with the expansion of the positive electrode active material or the like. Then, when the ratio A/B is excessively large (the total pore volume A of the pore having a pore diameter of 10 µm or more is excessively large with respect to the total pore volume B of the pore having a pore diameter smaller than 10 µm), macroscopic electrolyte diffusion easily occurs, however, since the number of the pores contributing to the microscopic electrolyte diffusion is small, it is considered that the microscopic electrolyte diffusion hardly occurs and hence discharge characteristics (a discharge capacity and the like) decrease.

Joints (an upper joint and a lower joint which are not shown) for holding the clad tube 12a and the core bar 12b are attached to both end portions of the clad tube 12a. The upper joint is attached at the side of one end portion (an opening portion for inserting the core bar 12b and filling a raw material (lead powder or the like) of a positive electrode material) of the clad tube 12a. The lower joint is attached at the side of the other end portion (the bottom portion of the clad tube 12a) of the clad tube 12a.

The core bar 12b is disposed along the longitudinal direction of the clad tube 12a at the center portion of the clad tube 12a. For example, the core bar 12b can be obtained by casting based on a pressure casting method. A component material of the core bar 12b may be a conductive material, and examples include a lead alloy such as a lead-calcium-tin based alloy and a lead-antimony-arsenic based alloy. This lead alloy may include selenium, silver, bismuth, and the like. Examples of the cross-sectional shapes perpendicular to the longitudinal direction of the core bar 12b include a circular shape (FIG. 1) and an oval shape. For example, the length of the core bar 12b is 170 to 400 mm. For example, the diameter of the core bar 12b is 2.0 to 4.0 mm.

The content of antimony of the core bar 12b is preferably in the following range based on the total mass of the core bar 12b. From the viewpoint of excellent strength and hardness of the core bar 12b, the content of antimony is preferably 2.0 mass% or more, more preferably 3.0 mass% or more, and further preferably 4.0 mass% or more. From the viewpoint of excellent corrosion resistance and the viewpoint of easily suppressing self discharge, the content of antimony is preferably 8.0 mass% or less, more preferably 5.0 mass% or less, an 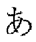 f d further preferably 4.0 mass% or less. For example, the content of antimony can be measured by high frequency inductively coupled plasma emission spectrometry (ICP emission spectrometry).

After formation, the positive electrode material 12c includes a positive electrode active material and can further include additives if necessary. For example, the positive electrode material after formation can be obtained by performing formation on the unformed positive electrode material including a raw material of the positive electrode active material. For example, the positive electrode material after formation may be obtained by performing formation on the unformed positive electrode material after obtaining the unformed positive electrode material by aging and drying a positive electrode material paste including the raw material of the positive electrode active material. Examples of the raw materials of the positive electrode active material include lead powder and red lead. Examples of the positive electrode active materials in the positive electrode material after formation include lead dioxide.

Examples of additives for the positive electrode material include reinforcing short fiber. Examples of the reinforcement short fibers include acrylic fibers, polyethylene fibers, polypropylene fibers, polyethylene terephthalate fibers (PET fibers), and the like.

For example, the negative electrode 20 is a paste type negative electrode plate. The negative electrode 20 includes a negative electrode current collector and a negative electrode material held by the negative electrode current collector. As the negative electrode current collector, a plate type current collector can be used. The negative electrode current collector and the core bar of the positive electrode may have the same or different compositions.

After formation, the negative electrode material includes a negative electrode active material and can further include additives if necessary. For example, the negative electrode material after formation can be obtained by performing formation on the unformed negative electrode material after obtaining the unformed negative electrode material by aging and drying a negative electrode material paste including the raw material of the negative electrode active material. Examples of the raw materials of the negative electrode active material include lead powder and red lead. Examples of the negative electrode active materials of the negative electrode material after formation include porous spongy lead.

Examples of additives for the negative electrode material include barium sulfate, reinforcing short fibers, a carbon material (carbonaceous conductive material), a resin having at least one selected from a group consisting of a sulfone group and a sulfonate group (a resin having a sulfone group and/or a sulfonate group). Examples of the reinforcing short fibers include the same reinforcing short fibers as those of the positive electrode material.

Examples of the carbon materials include carbon black and graphite. Examples of the carbon blacks include furnace black (Ketjen black (registered trademark) and the like), channel black, acetylene black and thermal black.

Examples of the resins having a sulfone group and/or a sulfonate group include lignin sulfonic acid, lignin sulfonate, condensates of phenols, aminoarylsulfonic acid and formaldehyde. Examples of the lignin sulfonates include an alkali metal salt of ligninsulfonic acid. Examples of the phenols include bisphenol based compounds such as bisphenol. Examples of the aminoarylsulfonic acids include aminobenzenesulfonic acid and aminonaphthalenesulfonic acid.

One surface of the separator 30 is in contact with the positive electrode 10 and the other surface of the separator 30 is in contact with the negative electrode 20. Each of the positive electrode 10 and the negative electrode 20 is sandwiched by the separators 30. Each of the positive electrode 10 and the negative electrode 20 may be sandwiched by two separators or may be sandwiched by one folded separator. An electrolyte 40 is filled in the periphery of the positive electrode 10 between the separators 30.

The material of the separator is not particularly limited as long as the material prevents the positive electrode and the negative electrode from being electrically connected to each other and allows the electrolyte to permeate. Examples of the materials of the separator include microporous polyethylene; a mixture of glass fiber and synthetic resin.

### <Lead Storage Battery Manufacturing Method>

A lead storage battery manufacturing method of the embodiment is a method of manufacturing a lead storage battery which includes a clad type electrode as a positive electrode. The lead storage battery manufacturing method of the embodiment includes a step of obtaining a clad type electrode by a clad type electrode manufacturing method of the embodiment. The clad type electrode manufacturing method of the embodiment includes a step of obtaining a clad tube by a clad tube manufacturing method of the embodiment.

For example, the lead storage battery manufacturing method of the embodiment includes an electrode preparing step of obtaining an electrode (a positive electrode and a negative electrode) and an assembly step of obtaining a lead storage battery by assembling component members including the electrode. When the electrode has not subjected to formation, the electrode includes, for example, an electrode material (a positive electrode material or a negative electrode material) including a raw material of an electrode active material (a positive electrode active material or a negative electrode active material), and a current collector (a positive electrode current collector or a negative electrode current collector) which holds the electrode material. For example, the electrode after formation includes an electrode material including an electrode active material and the like, and a current collector which serves as a conductive path of a current from the electrode material and holds the electrode material.

The electrode preparing step includes a positive electrode preparing step and a negative electrode preparing step. For example, the positive electrode preparing step includes a clad tube preparing step and a finishing step.

In the clad tube preparing step, for example, a base material (a fiber base material or the like) is impregnated with a resin component. In the clad tube preparing step, for example, a base material including a fiber bundle containing a bundling agent is impregnated with a resin component. For example, the clad tube manufacturing method of the embodiment includes a step of impregnating a fiber bundle containing a bundling agent with a resin component. For example, the fiber bundle containing the bundling agent is a fiber bundle which is bundled by using a bundling agent. Examples of the bundling agents include paraffin and starch. For example, the clad tube can be obtained by impregnating the fiber bundle with the resin component and performing drying.

In the finishing step, for example, a positive electrode including a core bar inserted into the clad tube; and a positive electrode material filled between the clad tube and the core bar is obtained. In the finishing step, for example, after enclosing the core bar with the clad tube, the positive electrode raw material is filled between the core bar and the clad tube, and then, the lower end of the tube is blocked with the lower joint, and therefore, the positive electrode having the unformed positive electrode material can be obtained.

In the negative electrode preparing step, for example, the negative electrode having the unformed negative electrode material can be obtained by performing aging and drying after filling the negative electrode current collector (for example, a current collector lattice (a cast lattice, an expanded lattice, and the like)) with the negative electrode material paste including the raw material of the negative electrode active material. The aging condition is preferably an atmosphere of a temperature of 35 to 85°C and a humidity of 50 to 98 RH% for 15 to 60 hours. The drying condition is preferably a temperature of 45 to 80°C for 15 to 30 hours.

For example, the negative electrode material paste may further include the above-described additives in addition to the raw material of the negative electrode active material. The negative electrode material paste may further include a solvent and sulfuric acid. Examples of the solvents include water and an organic solvent.

When additives such as barium sulfate, a carbon material, reinforcing short fibers, and a resin having a sulfone group and/or a sulfonate group are used in the negative electrode material paste, the mixing amount of the additives is preferably the following range with respect to 100 parts by mass of the raw material of the negative electrode active material. For example, the mixing amount of the barium sulfate is 0.01 to 2 parts by mass. For example, the mixing amount of the carbon material is 0.1 to 3 parts by mass. For example, the mixing amount of the reinforcing short fibers is 0.01 to 0.3 parts by mass. For example, the mixing amount of the resin having a sulfone group and/or a sulfonate group is 0.01 to 2 parts by mass in conversion into resin solid.

In the assembling step, for example, the unformed positive electrode and the unformed negative electrode are laminated with a separator interposed therebetween and current collection portions of the electrodes of the same polarities are welded with a strap to obtain an electrode group. This electrode group is disposed in a battery casing to prepare an unformed battery. Next, dilute sulfuric acid is added to the unformed battery and a DC current is supplied to perform a battery casing formation. The specific gravity of the sulfuric acid after formation is adjusted to an appropriate specific gravity to obtain the lead storage battery. For example, the specific gravity of sulfuric acid (before formation) is 1.100 to 1.260.

The formation condition and the specific gravity of sulfuric acid can be adjusted in response to the size of the electrode. Further, the formation process may be performed in the electrode preparing step (tank formation) instead of the timing after the assembling step.

### <Electric Vehicle and Manufacturing Method thereof>

An electric vehicle of the embodiment includes a lead storage battery of the embodiment. An electric vehicle manufacturing method of the embodiment includes a step of obtaining a lead storage battery by a lead storage battery manufacturing method of the embodiment. For example, the electric vehicle manufacturing method of the embodiment includes a step of obtaining a lead storage battery by a lead storage battery manufacturing method of the embodiment and a step of obtaining an electric vehicle by assembling component members including the lead storage battery. Examples of the electric vehicles include a forklift and a golf cart. According to the embodiment, a lead storage battery for an electric vehicle is provided, and for example, a lead storage battery for a forklift is provided.

### EXAMPLES

Hereinafter, the contents of the invention will be described in more detail with reference to examples and comparative examples, but the invention is not limited to the following examples.

### <Preparing of Positive Electrode Plate>

A core bar (a cross-sectional shape: circle shape, a length: 331 mm, and a diameter: 2.7 mm) made of lead-antimony alloy (antimony content: 4 mass%) was prepared. Next, the core bar was enclosed by a glass tube (a cross-sectional shape: circle shape, a length: 297 mm, and an outer diameter: 9.6 mm) having a pore volume ratio (the total pore volume of the pore having a pore diameter of 10 µm or more/the total pore volume of the pore having a pore diameter smaller than 10 µm) shown in Table 1, and lead powder mainly including lead monoxide was filled into the tube. Then, after fixing the tubes so as to arrange side by side, the lower ends of the tubes are blocked with the resinous lower joints by injection-molding to prepare fifteen tubular electrodes, and thus, a clad type positive electrode plate (a dimension: 306 mm in the vertical direction, 150 mm in the horizontal direction, and 10.0 mm in the thickness direction) was prepared as an unformed positive electrode plate.

Furthermore, as the glass tubes of Examples 1, 2, 4 to 7 and Comparative Examples 1 and 2, a tube obtained by impregnating a glass fiber bundle bundled using a bundling agent including paraffin with a resin component (phenol resin) and then performing drying was used. As the glass tube of Example 3, a tube obtained by impregnating a glass fiber bundle bundled using a bundling agent including starch with a resin component (phenol resin) and then performing drying was used. The pore volume ratio of the glass tube was adjusted by the impregnation amount of the resin component for impregnating the glass fiber bundle.

The pore volume ratio of the glass tube was calculated on the basis of the pore distribution. The pore distribution of the glass tube was measured using a pore size distribution meter (trade name: AUTO PORE IV 9520 manufactured by SHIMADZU CORPORATION). The pore volume ratio of the glass tube was calculated on the basis of the "total pore volume of the pore having a pore diameter of 10 µm or more"/the "total pore volume of the pore having a pore diameter smaller than 10 µm " after dividing the volume of each pore obtained from the pore distribution measurement result into the "total pore volume of the pore having a pore diameter of 10 µm or more" and the "total pore volume of the pore having a pore diameter smaller than 10 µm".

### <Preparing of Negative Electrode Plate>

A lead-antimony alloy (antimony content: 3 mass%) was melted and a lattice body (a dimension: 283.0 mm in the vertical direction, 141.0 mm in the horizontal direction, and 4.0 mm in the thickness direction) was prepared by a casting method. Next, 0.3 parts by mass of barium sulfate, 0.03 parts by mass of PET fiber, 0.2 parts by mass of lignin sulfonate, 8 parts by mass of water, and 10 parts by mass of dilute sulfuric acid (specific gravity: 1.260) were added to 100 parts by mass of lead powder mainly including lead monoxide and a kneading was performed to prepare a negative electrode material paste. Then, after the negative electrode material paste was filled into the lattice body, aging and drying were performed under the following condition to prepare an unformed negative electrode plate.
(Aging Condition) Temperature: 40°C, Humidity: 98 RH%, Time: 40 hours
(Drying Condition) Temperature: 60°C, Time: 24 hours

### <Preparing of Battery>

Seven of the unformed positive electrode plates and eight of the unformed negative electrode plates were alternately laminated with a separator made of polyethylene interposed therebetween to prepare an electrode plate group, and then positive electrode terminals and negative electrode terminals were welded to the electrode plate group. Next, the electrode plate group was inserted into a battery casing and then the battery casing was sealed. Then, after injecting dilute sulfuric acid (specific gravity: 1.260) from a liquid port, battery casing formation was performed to prepare a clad type lead storage battery. The battery casing formation condition was set such that a water temperature in a water tank was 40°C, a charged amount (reference: a theoretic formation electric amount of a positive electrode active material) was 250%, and a time was 36 hours.

### <Discharge Test>

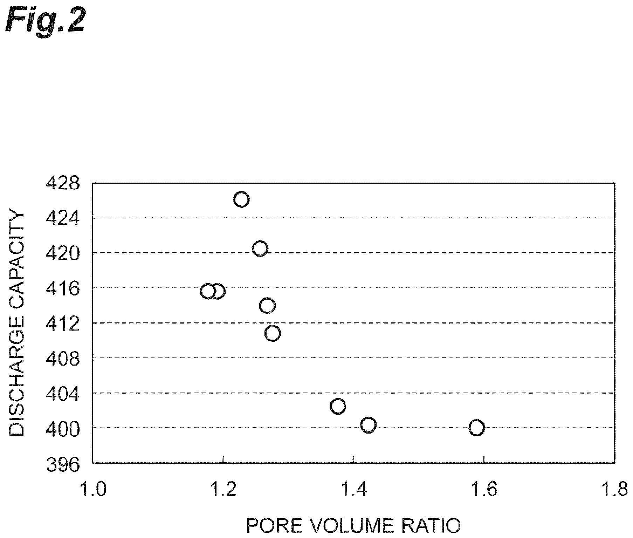

A rated capacity check test was performed at 0.2 CA. Specifically, 120% of the discharge capacity was constant-current charged with a current value of 0.1 CA at an ambient temperature of 30°C to obtain a fully charged state. Next, the fully charged clad type lead storage battery was left in the water tank (temperature: 30°C) for 24 hours and was then discharged to an end voltage of 1.7 V at 0.2 CA, and the discharge capacity (5 hour rate capacity, 0.2 CA discharge capacity, rated capacity, unit: Ah) at that time was measured. The result is shown in Table 1. Further, a relationship between the discharge capacity and the pore volume ratio is shown in FIG. 2.

**[Table 1]**

| | Pore volume ratio | 5 hour rate capacity |
|---|---|---|
| Example 1 | 1.18 | 415.60 |
| Example 2 | 1.19 | 415.60 |
| Example 3 | 1.23 | 426.00 |
| Example 4 | 1.26 | 420.40 |
| Example 5 | 1.27 | 414.00 |
| Example 6 | 1.28 | 410.93 |
| Example 7 | 1.38 | 402.40 |
| Comparative Example 1 | 1.42 | 400.27 |
| Comparative Example 2 | 1.59 | 400.00 |

As shown in Table 1 and FIG. 2, it was found that excellent discharge characteristics were obtained when the ratio A/B of the total pore volume A of the pore having a pore diameter of 10 µm or more with respect to the total pore volume B of the pore having a pore diameter smaller than 10 µm was 1.40 or less.

### Reference Signs List

10: positive electrode, 12: tubular electrode, 12a: clad tube, 12b: core bar, 12c: positive electrode material, 14: tubular electrode group, 20: negative electrode, 30: separator, 40: electrolyte, 100: lead storage battery.

## Claims

1. A clad tube (12a) to be used in a clad type electrode,
**characterized in that**, in the clad tube (12a), a ratio A/B of a total pore volume A of a pore having a pore diameter of 10 µm or more with respect to a total pore volume B of a pore having a pore diameter smaller than 10 µm is 1.15 to 1.40, the total pore volume being measured by a pore size distribution meter.

2. An electric vehicle, comprising:
a lead storage battery (100),
wherein the lead storage battery (100) comprises a clad type electrode as a positive electrode (10), and
the clad type electrode comprises a clad tube (12a),
**characterized in that**, in the clad tube (12a), a ratio A/B of a total pore volume A of a pore having a pore diameter of 10 µm or more with respect to a total pore volume B of a pore having a pore diameter smaller than 10 µm is 1.15 to 1.40, the total pore volume being measured by a pore size distribution meter.

3. The clad tube (12a) according to claim 1 or the electric vehicle according to claim 2,
wherein the ratio A/B is 1.23 to 1.38.

4. The clad tube (12a) according to claim 1 or 3 or the electric vehicle according to claim 2 or 3,
wherein the clad tube comprises glass.

5. The clad tube (12a) according to any one of claims 1, 3 and 4 or the electric vehicle according to any one of claims 2 to 4,
wherein the clad tube comprises a fiber bundle containing a bundling agent, and
wherein the bundling agent includes paraffin.

6. The clad tube (12a) according to any one of claims 1 and 3 to 5 or the electric vehicle according to any one of claims 2 to 5,
wherein the clad tube comprises a fiber bundle containing a bundling agent, and
wherein the bundling agent includes starch.

7. A clad type electrode, comprising:
the clad tube (12a) according to any one of claims 1 and 3 to 6.

8. A lead storage battery (100), comprising:
the clad type electrode according to claim 7 as a positive electrode (10).

9. A method of manufacturing a clad tube (12a) to be used in a clad type electrode, comprising:
a step of impregnating a base material with a resin component,
**characterized in that**, in the clad tube (12a), a ratio A/B of a total pore volume A of a pore having a pore diameter of 10 µm or more with respect to a total pore volume B of a pore having a pore diameter smaller than 10 µm is 1.15 to 1.40, the total pore volume being measured by a pore size distribution meter.

10. The method of manufacturing the clad tube (12a) according to claim 9,
wherein the ratio A/B is 1.23 to 1.38.

11. The method of manufacturing the clad tube (12a) according to claim 9 or 10,
wherein the clad tube (12a) includes glass.

12. The method of manufacturing the clad tube (12a) according to any one of claims 9 to 11,
wherein the base material includes a fiber bundle containing a bundling agent, and
the bundling agent includes paraffin.

13. The method of manufacturing the clad tube (12a) according to any one of claims 9 to 12,
wherein the base material includes a fiber bundle containing a bundling agent, and
the bundling agent includes starch.

14. A method of manufacturing a clad type electrode comprising a clad tube (12a), comprising:
a step of obtaining the clad tube (12a) by the method of manufacturing the clad tube (12a) according to any one of claims 9 to 13.

15. A method of manufacturing a lead storage battery (100) comprising a clad type electrode as a positive electrode (10), comprising:
a step of obtaining the clad type electrode by the method of manufacturing the clad type electrode according to claim 14.

## Patentansprüche

1. Plattiertes Rohr (12a), das in einer plattierten Elektrode zu verwenden ist,
**dadurch gekennzeichnet, dass** in dem plattierten Rohr (12a) ein Verhältnis A/B eines Gesamtporenvolumens A einer Pore mit einem Porendurchmesser von 10 µm oder mehr in Bezug auf ein Gesamtporenvolumen B einer Pore mit einem Porendurchmesser von kleiner als 10 µm 1,15 bis 1,40 beträgt, wobei das Gesamtporenvolumen durch ein Porengrößenverteilungsmessgerät gemessen wird.

2. Elektrofahrzeug, umfassend:
einen Bleiakkumulator (100),
wobei der Bleiakkumulator (100) eine plattierte Elektrode als positive Elektrode (10) umfasst und
die plattierte Elektrode ein plattiertes Rohr (12a) umfasst,
**dadurch gekennzeichnet, dass** in dem plattierten Rohr (12a) ein Verhältnis A/B eines Gesamtporenvolumens A einer Pore mit einem Porendurchmesser von 10 µm oder mehr in Bezug auf ein Gesamtporenvolumen B einer Pore mit einem Porendurchmesser von kleiner als 10 µm 1,15 bis 1,40 beträgt, wobei das Gesamtporenvolumen durch ein Porengrößenverteilungsmessgerät gemessen wird.

3. Plattiertes Rohr (12a) gemäß Anspruch 1 oder Elektrofahrzeug gemäß Anspruch 2,
wobei das Verhältnis A/B 1,23 bis 1,38 beträgt.

4. Plattiertes Rohr (12a) gemäß Anspruch 1 oder 3 oder Elektrofahrzeug gemäß Anspruch 2 oder 3,
wobei das plattierte Rohr Glas umfasst.

5. Plattiertes Rohr (12a) gemäß Anspruch 1, 3 und 4 oder Elektrofahrzeug gemäß irgendeinem der Ansprüche 2 bis 4,
wobei das plattierte Rohr ein Faserbündel umfasst, das ein Bündelungsmittel enthält, und
wobei das Bündelungsmittel Paraffin einschließt.

6. Plattiertes Rohr (12a) gemäß irgendeinem der Ansprüche 1 und 3 bis 5 oder Elektrofahrzeug gemäß irgendeinem der Ansprüche 2 bis 5,
wobei das plattierte Rohr ein Faserbündel umfasst, das ein Bündelungsmittel enthält, und
das Bündelungsmittel Stärke einschließt.

7. Plattierte Elektrode, umfassend:
das plattierte Rohr (12a) gemäß irgendeinem der Ansprüche 1 und 3 bis 6.

8. Bleiakkumulator (100), umfassend:
die plattierte Elektrode gemäß Anspruch 7 als positive Elektrode (10).

9. Verfahren zur Herstellung eines plattierten Rohrs (12a), das in einer plattierten Elektrode zu verwenden ist, umfassend:
einen Schritt zum Imprägnieren eines Basismaterials mit einer Harzkomponente,
**dadurch gekennzeichnet, dass** in dem plattierten Rohr (12a) ein Verhältnis A/B eines Gesamtporenvolumens A einer Pore mit einem Porendurchmesser von 10 µm oder mehr in Bezug auf ein Gesamtporenvolumen B einer Pore mit einem Porendurchmesser von kleiner als 10 µm 1,15 bis 1,40 beträgt, wobei das Gesamtporenvolumen durch ein Porengrößenverteilungsmessgerät gemessen wird.

10. Verfahren zur Herstellung des plattierten Rohrs (12a) gemäß Anspruch 9,
wobei das Verhältnis A/B 1,23 bis 1,38 beträgt.

11. Verfahren zur Herstellung des plattierten Rohrs (12a) gemäß Anspruch 9 oder 10,
wobei das plattierte Rohr (12a) Glas einschließt.

12. Verfahren zur Herstellung des plattierten Rohrs (12a) gemäß irgendeinem der Ansprüche 9 bis 11,
wobei das Basismaterial ein Faserbündel einschließt, das ein Bündelungsmittel enthält, und
das Bündelungsmittel Paraffin einschließt.

13. Verfahren zur Herstellung des plattierten Rohrs (12a) gemäß irgendeinem der Ansprüche 9 bis 12,
wobei das Basismaterial ein Faserbündel einschließt, das ein Bündelungsmittel enthält, und
das Bündelungsmittel Stärke einschließt.

14. Verfahren zur Herstellung der plattierten Elektrode, umfassend ein plattiertes Rohr (12a), umfassend:
einen Schritt zum Erhalten des plattierten Rohrs (12a) durch das Verfahren zur Herstellung des plattierten Rohrs (12a) gemäß irgendeinem der Ansprüche 9 bis 13.

15. Verfahren zur Herstellung eines Bleiakkumulators (100), umfassend eine plattierte Elektrode als positive Elektrode (10), umfassend:
einen Schritt zum Erhalten der plattierten Elektrode durch das Verfahren zur Herstellung der plattierten Elektrode gemäß Anspruch 14.

## Revendications

1. Tube de gaine (12a) à utiliser dans une électrode de type à gaine,
**caractérisé en ce que**, dans le tube de gaine (12a), un rapport A/B d'un volume de pore total A d'un pore présentant un diamètre de pore de 10 µm ou plus par rapport au volume de pore total B d'un pore présentant un diamètre de pore inférieur à 10 µm est de 1,15 à 1,40, le volume de pore total étant mesuré par un appareil de mesure de distribution de taille de pore.

2. Véhicule électrique, comprenant :
une batterie d'accumulateurs au plomb (100),
dans lequel la batterie d'accumulateurs au plomb (100) comprend une électrode de type à gaine en tant qu'électrode positive (10), et
l'électrode de type à gaine comprend un tube de gaine (12a),
**caractérisé en ce que**, dans le tube de gaine (12a), un rapport A/B d'un volume de pore total A d'un pore présentant un diamètre de pore de 10 µm ou plus par rapport au volume de pore total B d'un pore présentant un diamètre de pore inférieur à 10 µm est de 1,15 à 1,40, le volume de pore total étant mesuré par un appareil de mesure de distribution de taille de pore.

3. Tube de gaine (12a) selon la revendication 1 ou véhicule électrique selon la revendication 2,
dans lequel le rapport A/B est de 1,23 à 1,38.

4. Tube de gaine (12a) selon la revendication 1 ou 3 ou véhicule électrique selon la revendication 2 ou 3,
dans lequel le tube de gaine comprend du verre.

5. Tube de gaine (12a) selon l'une quelconque des revendications 1, 3 et 4 ou véhicule électrique selon l'une quelconque des revendications 2 à 4,
dans lequel le tube de gaine comprend un faisceau de fibres contenant un agent de formation de faisceau, et
dans lequel l'agent de formation de faisceau inclut de la paraffine.

6. Tube de gaine (12a) selon l'une quelconque des revendications 1 et 3 à 5 ou véhicule électrique selon l'une quelconque des revendications 2 à 5,
dans lequel le tube de gaine comprend un faisceau de fibres contenant un agent de formation de faisceau, et
dans lequel l'agent de formation de faisceau inclut de l'amidon.

7. Électrode de type à gaine, comprenant :
le tube de gaine (12a) selon l'une quelconque des revendications 1 et 3 à 6.

8. Batterie d'accumulateurs au plomb (100), comprenant :
l'électrode de type à gaine selon la revendication 7 en tant qu'électrode positive (10).

9. Procédé de fabrication d'un tube de gaine (12a) à utiliser dans une électrode de type à gaine, comprenant :
une étape d'imprégnation d'un matériau de base avec un composant de résine,
**caractérisé en ce que**, dans le tube de gaine (12a), un rapport A/B d'un volume de pore total A d'un pore présentant un diamètre de pore de 10 µm ou plus par rapport au volume de pore total B d'un pore présentant un diamètre de pore inférieur à 10 µm est de 1,15 à 1,40, le volume de pore total étant mesuré par un appareil de mesure de distribution de taille de pore.

10. Procédé de fabrication du tube de gaine (12a) selon la revendication 9,
dans lequel le rapport A/B est de 1,23 à 1,38.

11. Procédé de fabrication du tube de gaine (12a) selon la revendication 9 ou 10,
dans lequel le tube de gaine (12a) inclut du verre.

12. Procédé de fabrication du tube de gaine (12a) selon l'une quelconque des revendications 9 à 11,
dans lequel le matériau de base inclut un faisceau de fibres contenant un agent de formation de faisceau, et
l'agent de formation de faisceau inclut de la paraffine.

13. Procédé de fabrication du tube de gaine (12a) selon l'une quelconque des revendications 9 à 12,
dans lequel le matériau de base inclut un faisceau de fibres contenant un agent de formation de faisceau, et
l'agent de formation de faisceau inclut de l'amidon.

14. Procédé de fabrication d'une électrode de type à gaine comprenant un tube de gaine (12a), comprenant :
une étape d'obtention du tube de gaine (12a) par le procédé de fabrication du tube de gaine (12a) selon l'une quelconque des revendications 9 à 13.

15. Procédé de fabrication d'une batterie d'accumulateurs au plomb (100) comprenant une électrode de type à gaine comme électrode positive (10), comprenant :
une étape d'obtention de l'électrode de type à gaine par le procédé de fabrication de l'électrode de type à gaine selon la revendication 14.
